# FASCICULE DE BREVET EUROPEEN

(11) **EP 3 521 127 B1**
(45) Date de publication et mention de la délivrance du brevet: **21.10.2020**
(21) Numéro de dépôt: 19151450.4
(22) Date de dépôt: 11.01.2019
(51) Int. Cl.: B61D 17/02, B61D 49/00

(54) **VÉHICULE FERROVIAIRE À GRANDE VITESSE À AÉRODYNAMISME AMÉLIORÉ**
HOCHGESCHWINDIGKEITS-SCHIENENFAHRZEUG MIT VERBESSERTER AERODYNAMIK
HIGH-SPEED RAILWAY VEHICLE WITH IMPROVED AERODYNAMICS

(30) Priorité: 12.01.2018 FR 1850265
(43) Date de publication de la demande: 07.08.2019
(73) Titulaire: ALSTOM Transport Technologies, 93400 Saint-Ouen (FR)
(72) Inventeur: HIBON, Samuel, 72000 Le Mans (FR)
(74) Mandataire: Lavoix

(56) Documents cités:
- KR-A- 20140 048 480
- KR-A- 20140 050 478
- KR-B1- 101 381 872

## Description

La présente invention concerne un véhicule ferroviaire à grande vitesse, délimité par une coque extérieure.

Les véhicules ferroviaires circulant à très hautes vitesses sont une alternative en cours de développement au transport aérien pour des distances intermédiaires au sol. Ces véhicules permettent notamment de réduire l'impact environnemental du transport de marchandises et de passagers, et permettent d'augmenter les cadences de circulation.

Le développement des véhicules ferroviaires à très haute vitesse rencontre des problèmes importants dus à la résistance de l'air et aux forces de traînée lors du déplacement du véhicule. Pour des vitesses supérieures à 300 km/h, environ 80% de l'énergie dépensée dans la propulsion du véhicule résulte des forces de frottement dans l'air, et cette proportion est encore plus importante quand la vitesse envisagée augmente.

Il est donc particulièrement désirable de réduire ces pertes, voire de s'affranchir totalement des forces de trainée.

Le document KR 2014 0050478 A décrit un véhicule ferroviaire à grande vitesse, délimité par une coque extérieure, comportant:
- un dispositif de formation d'un plasma, au niveau d'une extrémité avant de la coque extérieure,
- un dispositif électrostatique de génération d'un champ électrique au voisinage d'une surface de guidage de la coque extérieure.

Une des solutions envisagées au problème est de faire circuler les véhicules ferroviaires dans des tunnels à très basse pression, voire sous vide, afin de s'affranchir des frottements avec l'air. Cette solution nécessite cependant des aménagements complexes et coûteux en termes de construction et de maintenance.

Il est donc désirable de développer des véhicules ferroviaires pouvant circuler à l'air libre à de très hautes vitesses.

Un but de l'invention est de fournir un véhicule ferroviaire capable de circuler à de très hautes vitesses dans l'air, tout en subissant des forces de trainée très réduites.

A cet effet, l'invention a pour objet un véhicule ferroviaire du type précité, le véhicule ferroviaire comportant:
- un dispositif de formation d'un plasma, au niveau d'au moins une extrémité de la coque extérieure,
- un dispositif électrostatique de génération d'un champ électrique au voisinage d'une surface de guidage de la coque extérieure,
- un dispositif magnétostatique de génération d'un champ magnétique au voisinage de la surface de guidage,
le dispositif électrostatique et le dispositif magnétostatique étant configurés pour coopérer et guider un écoulement du plasma le long de la surface de guidage, selon un mouvement d'ensemble sensiblement opposé à une direction d'avancée du véhicule ferroviaire.

Un tel véhicule ferroviaire est adapté pour générer une couche de plasma circulant autour de la coque extérieure et reprenant les frottements de l'air environnant, la couche se déplaçant en sens opposé du véhicule et réduisant ainsi grandement les forces de trainée.

Selon des modes de réalisation particuliers, le véhicule ferroviaire selon l'invention présente l'une ou plusieurs des caractéristiques suivantes, prise(s) isolément ou selon toute combinaison techniquement réalisable :
- la surface de guidage s'étend uniquement sur une partie avant de la coque extérieure ;
- la surface de guidage s'étend sur l'intégralité de la coque extérieure ;
- le dispositif électrostatique est agencé pour que le champ électrique s'étende localement selon une direction tangente à la surface de guidage, et le dispositif magnétostatique est agencé pour que le champ magnétique s'étende localement selon une direction normale à la surface de guidage ;
- le dispositif électrostatique comprend des électrodes linéaires s'étendant le long de la coque extérieure, sensiblement parallèles à la direction d'avancée du véhicule ferroviaire ;
- le dispositif magnétostatique comprend des câbles s'étendant le long de la coque extérieure, sensiblement parallèles à la direction d'avancée du véhicule ferroviaire ;
- les câbles sont des tubes en matériau supraconducteur ;
- le dispositif de formation du plasma comprend un générateur de micro-ondes configuré pour ioniser l'air au voisinage de l'extrémité avant de la coque extérieure ;
- le dispositif de formation du plasma comprend un réservoir de gaz adapté pour éjecter un gaz au voisinage de l'extrémité avant de la coque extérieure, et un générateur de micro-ondes configuré pour ioniser le gaz éjecté ;
- le véhicule ferroviaire comprend une coque intérieure s'étendant intérieurement par rapport à la coque extérieure, la coque intérieure étant réalisée en matériau imperméable au champ magnétique ; et
- le dispositif électrostatique et le dispositif magnétostatique sont adaptés pour ralentir la couche de plasma au niveau d'une extrémité arrière, en inversant le fonctionnement du dispositif électrostatique au voisinage de l'extrémité arrière

L'invention sera mieux comprise à la lecture de la description qui va suivre, donnée uniquement à titre d'exemple et faite en se référant aux dessins annexés, parmi lesquels :
- la figure 1 est une vue de côté d'un véhicule ferroviaire selon l'invention ;
- la figure 2 est une vue détaillée d'un système de guidage d'un plasma autour du véhicule ferroviaire de la figure 1 ;
- la figure 3 est une vue de côté d'un véhicule ferroviaire selon un deuxième mode de réalisation de l'invention.

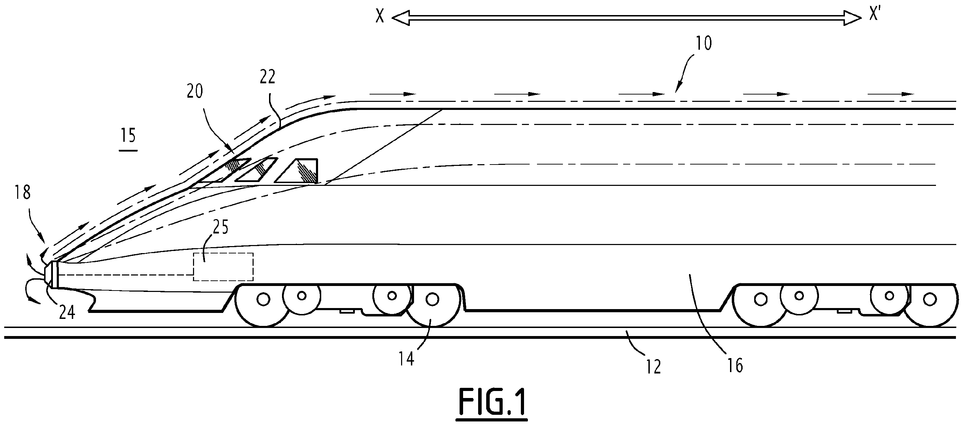

La figure 1 représente un véhicule ferroviaire 10 adapté pour se déplacer à grande vitesse sur des rails 12, selon au moins une direction de déplacement X-X'. Par grande vitesse, on entend une vitesse supérieure à 300 km/h, notamment supérieure à 450 km/h, avantageusement supérieure à 600 km/h.

Le véhicule ferroviaire 10 se déplace par exemple sur des roues 14 en contact avec les rails 12. En variante, le véhicule ferroviaire se déplace en suspension électromagnétique. Le véhicule ferroviaire 10 est configuré pour se déplacer à travers l'air environnant 15.

Le véhicule ferroviaire 10 est délimité par une coque extérieure 16 définissant un espace interne. La coque extérieure 16 présente une extrémité avant 18 définie par rapport à la direction de déplacement X-X'.

Une couche de plasma 20 s'écoule de manière continue depuis l'extrémité avant 18, autour d'une surface de guidage 22 définie sur la coque extérieure 16, selon une direction d'écoulement orientée sensiblement selon la direction de déplacement X-X'.

Le plasma 20 est un gaz ionisé au moins partiellement, notamment de l'air ionisé, comprenant des ions et des électrons libres.

La couche de plasma 20 s'étend continûment sur la surface de guidage 22, entre la coque extérieure 16 et l'air environnant 15, et présente par exemple une épaisseur supérieure à 5 mm selon une direction normale à la surface de guidage 22.

En variante, l'épaisseur de la couche de plasma 20 est supérieure à 20 mm, voire bien supérieure selon la géométrie du véhicule ferroviaire 10.

La surface de guidage 22 s'étend sur au moins une partie de la coque extérieure 16, notamment au moins à proximité de l'extrémité avant 18. Avantageusement, la surface de guidage 22 s'étend sur l'intégralité de la coque extérieure 16.

Le véhicule ferroviaire 10 comprend un dispositif de formation 24 de plasma, adapté pour former le plasma 20 au voisinage de l'extrémité avant 18.

Le dispositif de formation 24 comprend par exemple un générateur de micro-ondes 25 adapté pour ioniser l'air environnant 15 au voisinage de l'extrémité avant 18.

Selon une variante non représentée, le dispositif de formation 24 comprend un réservoir de gaz adapté pour éjecter un gaz au niveau de l'extrémité avant, ainsi qu'un générateur de micro-ondes adapté pour ioniser le gaz éjecté.

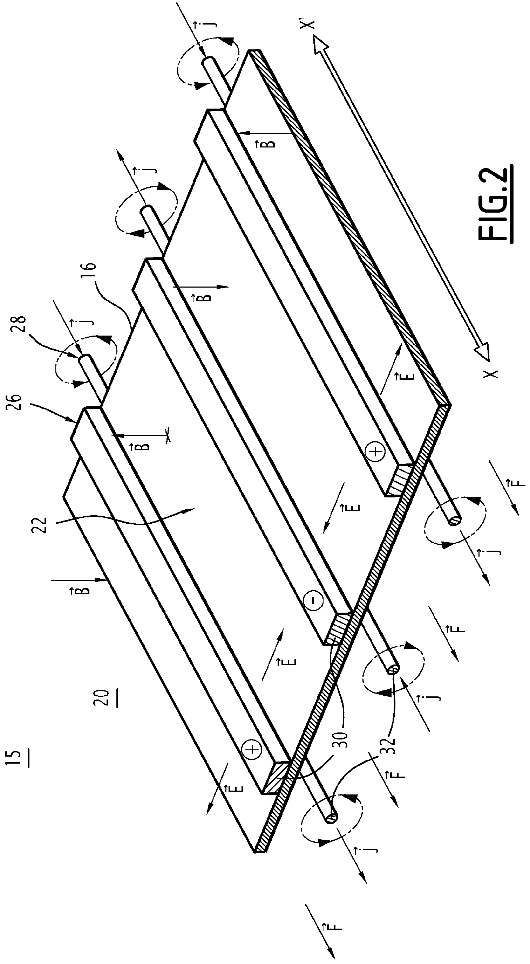

Le véhicule ferroviaire 10 comprend également un dispositif électrostatique 26 et un dispositif magnétostatique 28, partiellement représentés sur la figure 2, s'étendant tous deux sur la coque extérieure 16, le long de la surface de guidage 22.

Le dispositif électrostatique 26 et le dispositif magnétostatique 28 sont configurés pour coopérer et guider un écoulement du plasma 20 le long de la surface de guidage 22, selon une direction d'ensemble sensiblement opposée à la direction d'avancée X-X'.

Le dispositif électrostatique 26 est destiné à générer un champ électrique E au voisinage de la surface de guidage 22. Notamment, le dispositif électrostatique 26 est agencé pour que le champ électrique E s'étende localement selon une direction tangente à la surface de guidage 22.

Par exemple, le dispositif électrostatique 26 comprend des électrodes 30 linéaires, parallèles les unes aux autres, s'étendant le long de la coque extérieure 16, selon la direction d'avancée X-X'. Les électrodes 30 s'étendent par exemple contre une face externe de la coque extérieure 16.

Chaque électrode 30 présente une charge de même valeur absolue, et de signe alterné d'une des électrodes 30 à ses voisines les plus proches. Le champ électrique E généré entre les électrodes 30, au voisinage de la surface de guidage 22, est alors orienté selon une direction alternée entre une paire d'électrodes 30 voisines et la paire suivante.

Le dispositif magnétostatique 28 est destiné à générer un champ magnétique B au voisinage de la surface de guidage 22. Notamment, le dispositif magnétostatique 28 est agencé pour que le champ magnétique B s'étende localement selon une direction normale à la surface de guidage 22, au voisinage de la surface de guidage 22.

Par exemple, le dispositif magnétostatique 28 comprend des câbles 32 parallèles les uns aux autres, s'étendant le long de la coque extérieure 16, selon la direction d'avancée du véhicule ferroviaire 10. Les câbles 32 s'étendent par exemple contre une face interne de la coque extérieure 16, sous les électrodes 30.

Un courant j parcourt chaque câble 32, avec une même intensité et un sens de parcours alterné d'un des câbles 32 à ses voisins. Le champ magnétique B est alors orienté selon une direction alternée entre une paire de câbles 32 voisins et la paire suivante, au voisinage de la surface de guidage 22.

Avantageusement, les câbles 32 sont des tubes en matériau supraconducteur, ce qui permet au champ magnétique B de présenter une forte amplitude tout en minimisant les pertes par effet Joule.

Selon un mode de réalisation, le véhicule ferroviaire comprend 10 un système de refroidissement destiné à réduire l'effet du réchauffement Joule, et à maintenir les tubes en matériau supraconducteur en dessous de leur température critique.

Le système de refroidissement est par exemple adapté pour faire circuler un fluide réfrigérant, comme de l'hélium liquide, dans les tubes en matériau supraconducteur.

Selon une autre variante, le véhicule ferroviaire 10 comprend une coque intérieure, s'étendant intérieurement par rapport à la coque extérieure 16, la coque intérieure étant réalisée en matériau imperméable au champ magnétique. Les câbles 32 s'étendent dans un espace compris entre la coque extérieure 16 et la coque intérieure, afin de protéger l'espace interne du véhicule ferroviaire 10 des forts champs magnétiques.

Le plasma 20 comprend des particules chargées, qui sont plongées dans le champ électrique E et le champ magnétique B. Au voisinage de la surface de guidage 20, chaque particule chargée, présentant une charge q, subit alors la force de Lorentz, qui comprend une composante électrostatique qE due au champ électrique E et une composante magnétostatique F due au champ magnétique B.

La composante électrostatique qE étant orientée dans des directions alternées lors du passage de la particule d'un espace compris entre deux électrodes 30 voisines au suivant, elle subit des accélérations de sens contraire, qui ne créent pas de mouvement d'ensemble à l'échelle du plasma 20.

La composante magnétostatique F est toujours orientée dans le même sens quel que soit l'emplacement de la particule chargée au voisinage de la surface de guidage 20. En effet, la composante magnétostatique F est le produit de la charge de la particule et du vecteur produit de la vitesse de la particule et du champ magnétique B. Les sens de ces deux vecteurs alternent en passant d'un espace compris entre deux électrodes 30 voisines au suivant, ce qui maintient le vecteur produit constant. Cette composante magnétostatique F ne dépend pas non plus du signe de la charge de la particule, puisque le changement du signe de la charge inverse également le sens du vecteur vitesse.

La composante magnétostatique crée donc un mouvement d'ensemble dans le plasma 20, orientée selon la direction représentée sur la figure 2.

La couche de plasma 20 s'écoule le long de la coque extérieure 16 et isole le véhicule ferroviaire 10 de l'air environnant 15. Les frottements de l'air sont très largement réduits, ce qui permet de minimiser les pertes d'énergie.

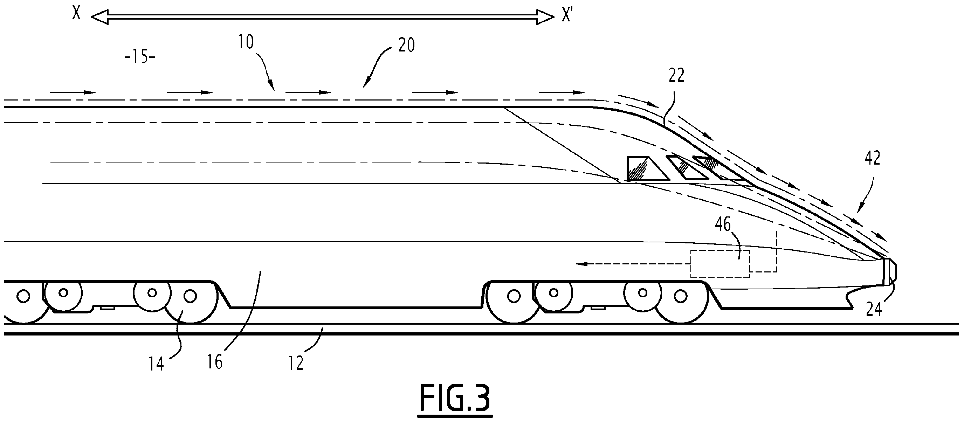

Selon un mode de réalisation de l'invention représenté sur la figure 3, le véhicule ferroviaire 10 comprend le dispositif électrostatique 26 et le dispositif magnétostatique 28 qui s'étendent également au niveau d'une extrémité arrière 42 du véhicule ferroviaire 10.

Le dispositif électrostatique 26 et le dispositif magnétostatique 28 sont identiques à ceux décrits plus haut, à la différence près le dispositif électrostatique 26 fonctionne de manière inverse afin de ralentir la couche de plasma 20 au niveau de l'extrémité arrière 42.

Les polarités des électrodes 30 sont inversées au niveau de l'extrémité arrière 42, de sorte que le sens de la composante magnétostatique F est inversé.

Le dispositif ralentit ainsi le mouvement d'ensemble de la couche de plasma 20 au voisinage de l'extrémité arrière 42.

Ce ralentissement est générateur d'énergie, qui est récupérée à travers un générateur magnétoaérodynamique 46, et avantageusement redirigée vers le dispositif de génération 24 situé à l'avant.

Ce mode de réalisation permet de ralentir le plasma 20 au niveau de l'extrémité arrière 42, qui retrouve une vitesse proche de zéro. Cela a pour effet de réduire la résistance de l'air et le bruit généré par le véhicule ferroviaire 10, ainsi que d'améliorer le rendement énergétique grâce à l'énergie récupérée par le générateur magnétoaérodynamique 46.

## Revendications

1. Véhicule ferroviaire (10) à grande vitesse, délimité par une coque extérieure (16), le véhicle ferroviaire comportant :
- un dispositif de formation (24) d'un plasma (20), au niveau d'une extrémité avant (18) de la coque extérieure (16),
- un dispositif électrostatique (26) de génération d'un champ électrique (E) au voisinage d'une surface de guidage (22) de la coque extérieure (16), **caractérisé en ce que** le véhicule ferroviaire comporte:
- un dispositif magnétostatique (28) de génération d'un champ magnétique (B) au voisinage de la surface de guidage (22),
le dispositif électrostatique (26) et le dispositif magnétostatique (28) étant configurés pour coopérer et guider un écoulement du plasma (20) le long de la surface de guidage (22), selon un mouvement d'ensemble sensiblement opposé à une direction d'avancée (X-X') du véhicule ferroviaire (10).

2. Véhicule ferroviaire (10) selon la revendication 1, dans lequel la surface de guidage (22) s'étend uniquement sur une partie avant de la coque extérieure (16).

3. Véhicule ferroviaire (10) selon l'une quelconque des revendications 1 et 2, dans lequel le dispositif électrostatique (26) est agencé pour que le champ électrique (E) s'étende localement selon une direction tangente à la surface de guidage (22), et le dispositif magnétostatique (28) est agencé pour que le champ magnétique (B) s'étende localement selon une direction normale à la surface de guidage (22).

4. Véhicule ferroviaire (10) selon l'une quelconque des revendications 1 à 3, dans lequel le dispositif électrostatique (26) comprend des électrodes (30) linéaires s'étendant le long de la coque extérieure (16), sensiblement parallèles à la direction d'avancée (X-X') du véhicule ferroviaire (10).

5. Véhicule ferroviaire (10) selon l'une quelconque des revendications 1 à 4, dans lequel le dispositif magnétostatique (28) comprend des câbles (32) s'étendant le long de la coque extérieure (16), sensiblement parallèles à la direction d'avancée (X-X') du véhicule ferroviaire (10).

6. Véhicule ferroviaire (10) selon la revendication 5, dans lequel les câbles (32) sont des tubes en matériau supraconducteur.

7. Véhicule ferroviaire (10) selon l'une quelconque des revendications 1 à 6, dans lequel le dispositif de formation (24) du plasma (20) comprend un générateur de micro-ondes (25) configuré pour ioniser l'air (15) au voisinage de l'extrémité (18) avant de la coque extérieure (16).

8. Véhicule ferroviaire (10) selon l'une quelconque des revendications 1 à 6, dans lequel le dispositif de formation (24) du plasma (20) comprend un réservoir de gaz adapté pour éjecter un gaz au voisinage de l'extrémité avant (18) de la coque extérieure (16), et un générateur de micro-ondes configuré pour ioniser le gaz éjecté.

9. Véhicule ferroviaire (10) selon l'une quelconque des revendications 1 à 8, dans lequel le véhicule ferroviaire (10) comprend une coque intérieure s'étendant intérieurement par rapport à la coque extérieure (16), la coque intérieure étant réalisée en matériau imperméable au champ magnétique (B).

10. Véhicule ferroviaire (10) selon l'une quelconque des revendications 1 à 9, dans lequel le dispositif électrostatique (26) et le dispositif magnétostatique (28) sont adaptés pour ralentir la couche de plasma (20) au niveau d'une extrémité arrière (42), en inversant le fonctionnement du dispositif électrostatique (26) au voisinage de l'extrémité arrière (42).

## Patentansprüche

1. Hochgeschwindigkeits-Schienenfahrzeug (10), das von einer Außenschale (16) begrenzt ist, wobei das Schienenfahrzeug aufweist:
- eine Vorrichtung zur Bildung (24) eines Plasmas (20) auf Höhe eines vorderen Endes (18) der Außenschale (16),
- eine elektrostatische Vorrichtung (26) zur Erzeugung eines elektrischen Felds (E) benachbart zu einer Führungsfläche (22) der Außenschale (16), **dadurch gekennzeichnet, dass** das Schienenfahrzeug aufweist:
- eine magnetostatische Vorrichtung (28) zur Erzeugung eines Magnetfelds (B) benachbart zu der Führungsfläche (22),
wobei die elektrostatische Vorrichtung (26) und die magnetostatische Vorrichtung (28) konfiguriert sind zum Zusammenwirken und Führen eines Flusses des Plasmas (20) entlang der Führungsfläche (22) gemäß einer Gesamtbewegung im Wesentlichen entgegengesetzt zu einer Vorrückrichtung (X-X') des Schienenfahrzeugs (10).

2. Schienenfahrzeug (10) gemäß Anspruch 1, wobei die Führungsfläche (22) sich einzig an einem vorderen Abschnitt der Außenschale (16) erstreckt.

3. Schienenfahrzeug (10) gemäß irgendeinem der Ansprüche 1 und 2, wobei die elektrostatische Vorrichtung (26) angeordnet ist, damit das elektrische Feld (E) sich lokal entlang einer Richtung tangential zur Führungsfläche (22) erstreckt, und wobei die magnetostatische Vorrichtung (28) angeordnet ist, damit das magnetische Feld (B) sich lokal entlang einer Richtung normal zur Führungsfläche (22) erstreckt.

4. Schienenfahrzeug (10) gemäß irgendeinem der Ansprüche 1 bis 3, wobei die elektrostatische Vorrichtung (26) lineare Elektroden (30) aufweist, die sich entlang der Außenschale (16) erstrecken im Wesentlichen parallel zu der Vorrückrichtung (X-X') des Schienenfahrzeugs (10).

5. Schienenfahrzeug (10) gemäß irgendeinem der Ansprüche 1 bis 4, wobei die magnetostatische Vorrichtung (28) Kabel (32) aufweist, die sich entlang der Außenschale (16) erstrecken im Wesentlichen parallel zu der Vorrückrichtung (X-X') des Schienenfahrzeugs (10).

6. Schienenfahrzeug (10) gemäß Anspruch 5, wobei die Kabel (32) Rohre aus supraleitendem Material sind.

7. Schienenfahrzeug (10) gemäß irgendeinem der Ansprüche 1 bis 6, wobei die Vorrichtung zur Bildung (24) des Plasmas (20) einen Mikrowellen-Generator (25) aufweist, der konfiguriert ist zum Ionisieren der Luft (15) benachbart zu dem vorderen Ende (18) der Außenschale (16).

8. Schienenfahrzeug (10) gemäß irgendeinem der Ansprüche 1 bis 6, wobei die Vorrichtung zur Bildung (24) des Plasmas (20) aufweist ein Gasreservoir, das angepasst ist zum Ausstoßen eines Gases benachbart zu dem vorderen Ende (18) der Außenschale (16), und einen Mikrowellengenerator, der konfiguriert ist zum Ionisieren des ausgestoßenen Gases.

9. Schienenfahrzeug (10) gemäß irgendeinem der Ansprüche 1 bis 8, wobei das Schienenfahrzeug (10) aufweist eine Innenschale, die sich bezüglich der Außenschale (16) innen erstreckt, wobei die Innenschale aus einem gegenüber dem Magnetfeld (B) undurchlässigen Material realisiert ist.

10. Schienenfahrzeug (10) gemäß irgendeinem der Ansprüche 1 bis 9, wobei die elektrostatische Vorrichtung (26) und die magnetostatische Vorrichtung (28) angepasst sind zum Verlangsamen der Plasmaschicht (20) auf Höhe eines hinteren Endes (42) durch Umkehren der Funktion der elektrostatischen Vorrichtung (26) benachbart zu dem hinteren Ende (42).

## Claims

1. High-speed railway vehicle (10), delimited by an outer shell (16), the railway vehicle comprising:
- a forming device (24) for forming a plasma (20) at a front end (18) of the outer shell (16),
- an electrostatic device (26) for generating an electric field (E) in the vicinity of a guide surface (22) of the outer shell (16),
**characterised in that** the railway vehicle comprises:
- a magnetostatic device (28) for generating a magnetic field (B) in the vicinity of the guide surface (22),
the electrostatic device (26) and the magnetostatic device (28) being configured to cooperate and guide a flow of the plasma (20) along the guide surface (22) in an aggregate movement which is substantially opposed to a direction of travel (X-X') of the railway vehicle (10).

2. Railway vehicle (10) according to claim 1, wherein the guide surface (22) extends only over a front portion of the outer shell (16).

3. Railway vehicle (10) according to either claim 1 or claim 2, wherein the electrostatic device (26) is arranged so that the electric field (E) extends locally in a direction tangential to the guide surface (22) and the magnetostatic device (28) is arranged so that the magnetic field (B) extends locally in a direction normal to the guide surface (22).

4. Railway vehicle (10) according to any one of claims 1 to 3, wherein the electrostatic device (26) comprises linear electrodes (30) extending along the outer shell (16), substantially parallel to the direction of travel (X-X') of the railway vehicle (10).

5. Railway vehicle (10) according to any one of claims 1 to 4, wherein the magnetostatic device (28) comprises cables (32) extending along the outer shell (16), substantially parallel to the direction of travel (X-X') of the railway vehicle (10).

6. Railway vehicle (10) according to claim 5, wherein the cables (32) are tubes of superconducting material.

7. Railway vehicle (10) according to any one of claims 1 to 6, wherein the forming device (24) for forming the plasma (20) comprises a microwave generator (25) configured to ionise the air (15) in the vicinity of the front end (18) of the outer shell (16).

8. Railway vehicle (10) according to any one of claims 1 to 6, wherein the forming device (24) for forming the plasma (20) comprises a gas reservoir adapted to eject a gas in the vicinity of the front end (18) of the outer shell (16) and a microwave generator configured to ionise the ejected gas.

9. Railway vehicle (10) according to any one of claims 1 to 8, wherein the railway vehicle (10) comprises an inner shell extending on the inside relative to the outer shell (16), the inner shell being made of material that is impermeable to the magnetic field (B).

10. Railway vehicle (10) according to any one of claims 1 to 9, wherein the electrostatic device (26) and the magnetostatic device (28) are adapted to slow down the layer of plasma (20) at a rear end (42) by reversing the operation of the electrostatic device (26) in the vicinity of the rear end (42).
